# EUROPEAN PATENT APPLICATION

(11) **EP 4 487 928 A1**
(43) Date of publication of application: **08.01.2025**
(21) Application number: 24181442.5
(22) Date of filing: 11.06.2024
(51) Int. Cl.: A63F 13/245, A63F 13/837, A63F 13/98

(54) **AN ATTACHMENT FOR A VIDEO GAME CONTROLLER, AN ATTACHMENT KIT FOR THE SAME, AND A VIDEO GAME INPUT SYSTEM**

(30) Priority: 30.06.2023 GB 202309988
(71) Applicant: Sony Interactive Entertainment Inc., Tokyo 108-0075 (JP)
(72) Inventor: JIMENEZ, Daniel P., London, W1F 7LP (GB)
(74) Representative: D Young & Co LLP

(57) **Abstract**

An attachment for a video game controller, comprising: a trigger; a mounting member that is removably couplable to one of two handle portions of the video game controller, wherein the trigger is movably coupled to the mounting member; and coupling means for coupling the trigger to the video game controller such that a motion of the trigger relative to the mounting member causes the video game controller to emit a control signal for controlling an operation of an entertainment device when the coupling means are coupled to the video game controller.

## Description

### Field of Disclosure

The present disclosure relates to an attachment for a video game controller, an attachment kit for the same, and a video game input system.

### Background

While video game controllers have become a popular means for providing inputs to video games, certain video game players may find using such video game controllers difficult and/or unintuitive; pressing one or more buttons in order to make, say, an in-game character perform an action may prove a steep learning curve for such users, especially when the action being performed by the character shows little to no resemblance to the physical action of pressing a button. As a non-limiting example, pressing a button to make the character jump may be viewed by such users as less intuitive than, say, moving the controller in an upward vertical direction (towards the head of the user, for example), which would thus make the controller move in a similar upward manner to that of the resulting jump performed by the character.

Moreover, some players may lack the dexterity/motor skills required to operate a video game controller in a proficient manner.

The present disclosure seeks to alleviate or mitigate this issue.

### Summary of the Disclosure

In a first aspect, an attachment for a video game controller is provided in claim 1.

In another aspect, an attachment kit for a video game controller is provided in claim 12.

In yet another aspect, a video game input system is provided in claim 13.

Further respective aspects and features of the disclosure are defined in the appended claims.

Embodiments of the present disclosure will now be described by way of example with reference to the accompanying drawings, in which:
- Figure 1 schematically illustrates a Dualsense ^{®} controller;
- Figure 2 schematically illustrates an attachment according to embodiments of present description;
- Figure 3 schematically illustrates an attachment according to embodiments of present description coupled to a Dualsense ^{®} controller;
- Figure 4 schematically illustrates an attachment according to embodiments of present description;
- Figure 5 schematically illustrates an attachment according to embodiments of present description;
- Figure 6 schematically illustrates an attachment according to embodiments of present description;
- Figure 7 schematically illustrates an attachment according to embodiments of present description;
- Figure 8 schematically illustrates an attachment according to embodiments of present description coupled to a Dualsense ^{®} controller;
- Figure 9 schematically illustrates an attachment according to embodiments of present description coupled to a Dualsense ^{®} controller;
- Figure 10A schematically illustrates an attachment according to embodiments of present description;
- Figure 10B schematically illustrates an attachment according to embodiments of present description;
- Figure 11 schematically illustrates an attachment according to embodiments of present description;
- Figure 12 schematically illustrates an attachment kit according to embodiments of present description coupled to a Dualsense ^{®} controller;
- Figure 13 schematically illustrates a video game input system according to embodiments of present description;
- Figure 14 schematically illustrates a Dualsense ^{®} controller being held in a manner analogous to a firearm; and
- Figure 15 schematically illustrates a Dualsense ^{®} controller being held in a manner analogous to a firearm.

### Description of the Embodiments

An attachment for a video game controller, an attachment kit for the same, and a video game input system are disclosed. In the following description, a number of specific details are presented in order to provide a thorough understanding of the embodiments of the present disclosure. It will be apparent, however, to a person skilled in the art that these specific details need not be employed to practice the present disclosure. Conversely, specific details known to the person skilled in the art are omitted for the purposes of clarity where appropriate.

The terms "coupled" and "connected," along with their derivatives, may be used herein to describe structural relationships between components of the apparatus for performing the operations herein. It should be understood that these terms are not intended as synonyms for each other. Rather, in embodiments of the present description, "connected" is used to indicate that two or more elements are in direct physical or electrical contact with each other while "coupled" is used to indicate two or more elements are in either direct or indirect (with other intervening elements between them) physical or electrical contact with each other, and/or that the two or more elements co-operate or communicate with each other (e.g., as in a cause an effect relationship).

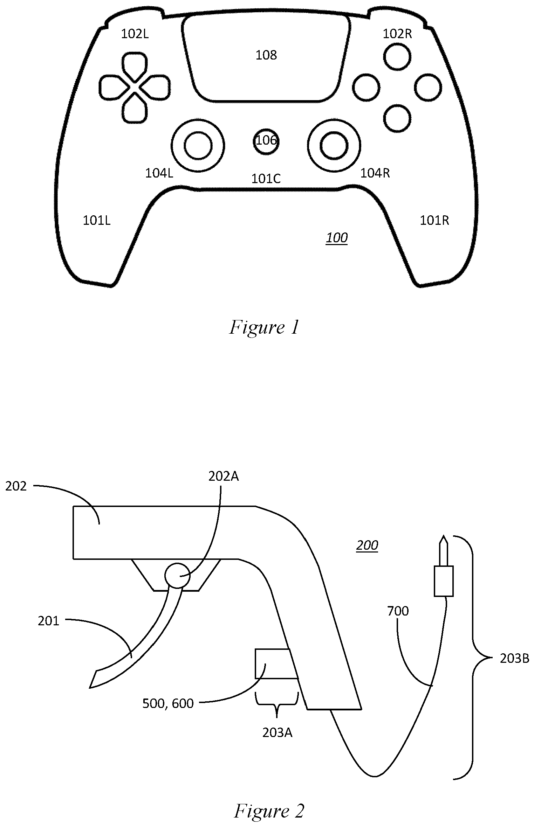

Turning now to Figure 1, the DualSense ^{®} controller 100 is illustrated as a non-limiting example of a video game controller for which attachments and attachment kits according to embodiments of the present description may be suitable. Such a controller typically has two handle sections 101L,R and a central body 101C. Various controls are distributed over the controller, typically in local groups. Examples include a left button group 102L, which may comprise directional controls and/or one or more shoulder buttons, and similarly right button group 102R, which comprise function controls and/or one or more shoulder buttons. The controller also includes left and/or right thumbsticks 104L,R, which may optionally also be operable as buttons by pressing down on them.

The controller (typically in the central portion of the device) may also comprise one or more system buttons 106, which typically cause interaction with an operating system of the entertainment device rather than with a game or other application currently running on it; such buttons may summon a system menu, or allow for recording or sharing of displayed content. Furthermore, the controller may comprise one or more other elements such as a touchpad 108, a light for optical tracking (not shown), a screen (not shown), haptic feedback elements (not shown), and the like.

As mentioned previously, certain video game players may find using conventional video game controllers difficult and/or unintuitive. Moreover, some players may lack the dexterity/motor skills required to operate a conventional video game controller in a proficient manner.

Thus, there is a need in the art to adapt conventional video game controllers in order to enable such users to use these conventional video game controllers more intuitively/with less difficulty.

The present disclosure seeks to fulfil this need by providing an attachment for a conventional video game controller which, when coupled to the conventional controller, enables users to hold and operate the conventional controller as a firearm. As will be appreciated by persons skilled in the art, such an attachment enables users to play shooting games in a more intuitive/less difficult manner; the holding and operating of the conventional controller in a manner similar to that of a firearm bears a greater resemblance to the typical actions performed in such shooter games (that is, firing firearms) than, say, moving a thumbstick, pressing a button, or pulling a trigger located on the shoulder of controller (it will be appreciated that while the motion of the shoulder trigger itself resembles that of a firearm trigger, the handling of the controller while pulling the shoulder trigger does not resemble the holding of a firearm while pulling the trigger).

The attachment thus enables users to adopt a more "point and shoot" approach to providing inputs to shooter games, which typically requires less so-called "fine" motor skills (finger/thumb movements, for example) and more so-called "gross" motor skills (limb/torso movements, for example) than that required to proficiently operate a video game controller in the conventional manner. As will be appreciated by persons skilled in the art, this approach enables players with motor skill issues to rely on their gross motor skills (pointing the controller at the virtual object/character they want to shoot) more than their fine motor skills (the fine motor skills required for this point and shoot approach may be reduced to that of pulling the trigger), thus making operation of the controller more accessible to such users.

As will be appreciated by persons skilled in the art, the latest generations of conventional games controllers comprise location/orientation tracking means such as gyroscopes and accelerometers. Such tracking means may therefore be exploited to enable users to adopt this point and shoot approach to shooting games; while the user moves the controller towards the in-game object/character they want to shoot, the tracking means may transmit location/orientation data to the video games console executing the video game, and the location/orientation of the in-game gun being used by the user may be updated based on the transmitted location/orientation data.

### Attachment for a video game controller

Accordingly, turning now to Figure 2, in embodiments of the present description, an attachment 200 for a video game controller comprises trigger 201; mounting member 202 that is removably couplable to one of two handle portions of the video game controller, wherein trigger 201 is movably coupled to mounting member 202; and coupling means 203 coupling trigger 201 to the video game controller such that a motion of trigger 201 relative to mounting member 202 causes the video game controller to emit a control signal for controlling an operation of an entertainment device when coupling means 203 are coupled to the video game controller.

While Figure 2 depicts coupling means 203 as signal generating circuitry 203A (pressure sensor 500 or proximity sensor 600, for example) and signal transmitting circuitry 203B (cable 700, for example) skilled persons will appreciate that this embodiment is entirely non-limiting; other embodiments of coupling means 203 falling within the scope of the present disclosure shall be described later herein. Moreover, while Figure 2 depicts trigger 201 as being hingedly coupled to mounting member 202 via hinge 202A, skilled persons will appreciate that this embodiment is entirely non-limiting; trigger 201 may alternatively be slidably coupled to mounting member 202, as shall be discussed later herein.

As a non-limiting example of attachment 200 in use, consider a user playing a first person shooter (FPS) game on their video game console (entertainment device). The user may wish to play the FPS game in a manner that is more intuitive/accessible due to having dexterity/motor skill issues, or due to struggling to remember which buttons to press at which time in order to cause the in-game character to perform the desired actions. Accordingly, the user may couple their attachment 200 to their video game controller (such as controller 100).

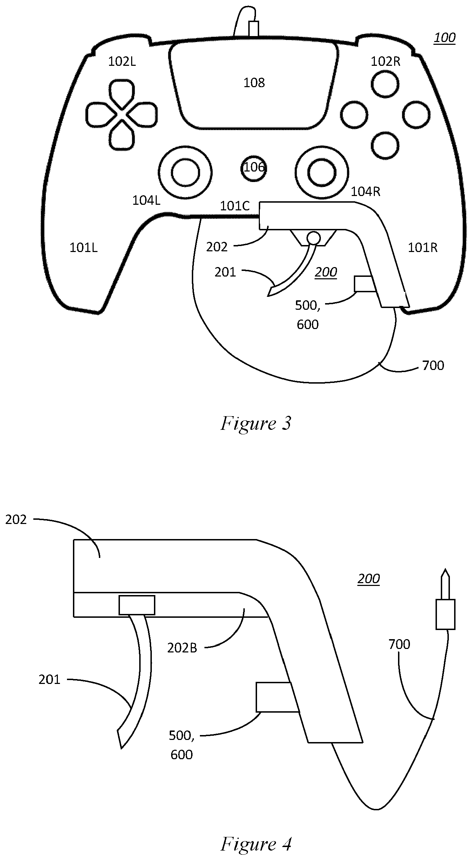

Figure 3 depicts attachment 200 after having been coupled to video game controller 100. As will be appreciated by persons skilled in the art, mounting member 202 has been coupled to one of the two handle portions of controller 100 (handle portion 101R, for example). This removable coupling may be achieved by making the profile of the part of mounting member 202 that couples with handle portion 101R to be complementary with the profile of handle portion 101R, for example. This may enable a secure fitting of mounting member 202 to handle portion 101R when coupled thereto, albeit one that may be overcome by the user should they wish to remove attachment 202 from controller 100.

Coupling attachment 200 to one of the handle portions of controller 100 enables the user to hold the controller in a manner analogous to that of a firearm. This provides a more intuitive manner of providing control signals to the FPS game, as the user may adopt a "point and shoot approach" to playing the game. For example, the user may aim their in-game character's gun by orienting the other of the two handle portions of controller 100 (hand portion 101L, for example) towards a region of the display screen that is displaying the video game, and subsequently fire the character's gun by pulling trigger 201.

While this example is based on attachment 200 being coupled to handle portion 101R, and handle portion 101L being oriented towards the display screen for aiming, skilled persons will appreciate that the converse arrangement (that is, attachment 200 being coupled to handle portion 101L, and handle portion 101R being oriented towards the display screen for aiming) falls within the scope of the present disclosure.

As will be appreciated by persons skilled in the art, detecting the orientation of controller 100 (and thus determining where the user is aiming) may be carried out by using gyroscopes/accelerometers, which are typically comprised within commonly-known video game controllers, especially those produced in recent years. Alternatively or in addition, illuminating elements and cameras may be used to track controller orientation, as shall be discussed later herein.

Once the trigger is pulled, coupling means 203 detects the trigger pull and in response causes controller 100 to emit a control signal for firing the character's gun (that is, controlling operation of the entertainment device). As a non-limiting example of how coupling means 203 causes controller 100 to emit the control signal, pressure sensor 500 (that is, generating circuitry 203A) generates a signal (a voltage, for example) when trigger 201 makes contact therewith, the contact arising due to the trigger being displaced by the pulling thereof by the user. Subsequently, cable 700 (that is, transmitting circuitry 203B), which is coupled to pressure sensor 500 and a port of controller 100 (a USB port, headphone jack, or the like), transmits the generated signal to controller 100, which causes controller 100 to emit the control signal.

By enabling the user to adopt this point and shoot approach to playing the FPS video game, the user may rely on their gross motor skills more than their fine motor skills, thus making the game more accessible for the user. Additionally, playing the game in such a manner is more intuitive, as the actions the user performs (that is, orienting controller 100 and pulling trigger 201) bear a greater resemble to the in-game character's actions (that is, aiming and shooting a firearm) than does pressing controller buttons/manipulating controller joysticks.

### Trigger and Mounting Member

Embodiments of the present description comprise trigger 201, and mounting member 202 that is removably couplable to one of two handle portions of a video game controller (such as controller 100), wherein trigger 201 is movably coupled to mounting member 202.

As will be appreciated by persons skilled in the art, the term "removably couplable" is being used herein to mean that mounting member 202 (and thus attachment 200) may be coupled and decoupled to the video game controller as desired. For example, a user may couple attachment 200 to controller 100 before playing an FPS game, and afterwards decouple it before playing, say, a turn-based strategy game where a point and shoot may not necessarily make gameplay more intuitive. Of course, the user may wish to keep attachment 200 coupled to controller 100 for the turn-based strategy game should they find it beneficial for them to do so. However, the user should be able to couple and decouple attachment at will. As mentioned previously, mounting member 202 may be formed/shaped so as to enable it to be removably coupled to controller 100. For example, the profile of the part of mounting member 202 that couples with handle portion 101R may be formed/shaped so as to be complementary with the profile of handle portion 101R, for example.

As will be appreciated by persons skilled in the art, the term "movably coupled" is being used herein to mean that trigger 201 is coupled to mounting member 202 in such a manner so as to enable trigger 201 to move relative to mounting member 202. For example, in Figures 2 and 3, trigger 201 is depicted as being hingedly coupled to mounting member 202 such that trigger 201 rotates about hinge 202A when pulled. However, trigger 201 may be movably coupled to mounting member 202 in other ways. As depicted in Figure 4, trigger 201 may be slidably coupled to mounting member 202 such that trigger 201 slides along rail 202B when pulled.

Hence more generally, in embodiments of the present description, trigger 201 may be hingedly coupled to mounting member 202 (via hinge 202A, for example), or trigger 201 may be slidably coupled to mounting member 202 (via rail 202B, for example).

In embodiments of the present description, it may beneficial to enable trigger 201 to return back to a predetermined position when not being pulled. This may be especially beneficial in the case where trigger 201 is slidably coupled to mounting member 202. This is because, once pulled, trigger 201 may not return to the position it was at prior to being pulled, unlike a hingedly coupled trigger, which may return to its original position (that is, position before being pulled) due to gravity, for example.

If trigger 201 is unable to return to its original position before being pulled again, then repeated firings (repeated pulling of trigger 201) may not be taken into account by controller 100, and thus may not emit repeated control signals for rapid firing of the in-game weapon, for example. For example, proximity sensors typically produce a discrete signal when an object falls within a threshold distance away from them, but do not typically produce repeated signals if the object remains within the threshold distance. Thus, the object (trigger 201, for example) typically has to move out of the threshold distance before coming back within the threshold distance to cause another (subsequent) discrete signal to be output by the proximity sensor. In such case, means to move trigger 201 away from the proximity sensor may be beneficial to ensure that a repeated pulling thereof results in repeated signals being output by the proximity sensor.

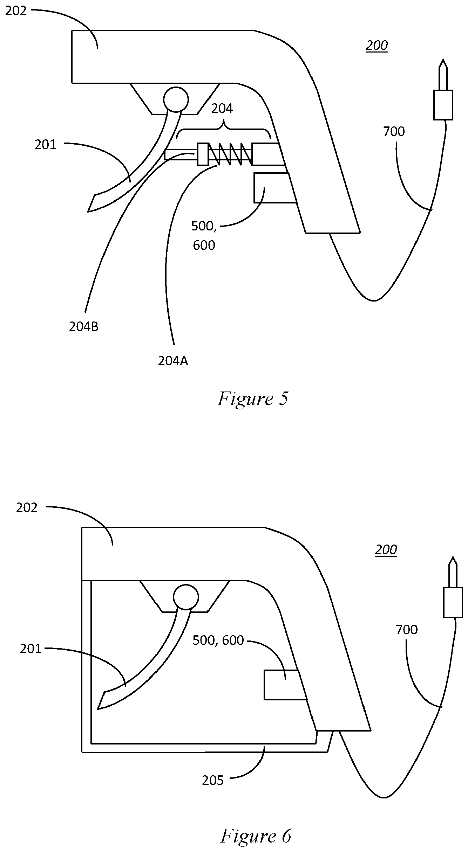

Therefore, and turning now to Figure 5, embodiments of the present description may comprise biasing means 204 for biasing a position of trigger 201 relative to mounting member 202 towards a predetermined position.

As can be seen in Figure 5, biasing means 204 may comprise elastic element 204A (a spring, for example) and a piston 204B. Elastic element 204A may be disposed between the housing and shaft of piston 204B. As will be appreciated by persons skilled in the art, other arrangements comprising an elastic element 204A may be used.

Alternatively or in addition, biasing means that are typically integral to the thumbsticks of controller 100 may be leveraged. For example, a coupling member (a string, for example) may be used to mechanically couple the trigger to one of the thumbsticks of controller 100, and that thumbstick's biasing means (which are used to return the thumbstick to a so-called "neutral position" when not being manipulated) may be used to return trigger 201 to a predetermined position.

In embodiments of the present description, it may be desirable to reduce or eliminate unintended trigger pulls, and thus reduce or eliminate unintended control signals being emitted by controller 100 when attachment 200 is coupled thereto. As will be appreciated by persons skilled in the art, such unintended control signals may cause the entertainment device to perform processing that is undesired (shooting in wrong direction, selecting wrong in-game item, accidental purchases of in-game content, and the like).

Therefore, and turning now to Figure 6, embodiments of the present description may comprise trigger guard 205. As will be appreciated by persons skilled in the art, trigger guard 205 may be integral to mounting member 202 (that is, mounting member 202 and trigger guard may be formed as one object), or trigger guard 205 may be removably couplable thereto (by using some sort of snap fit mechanism(s), for example). Like with real firearms, trigger guard 205 prevents trigger 201 for being accidentally pulled due to chance interactions with other objects (clothes, holsters, and the like).

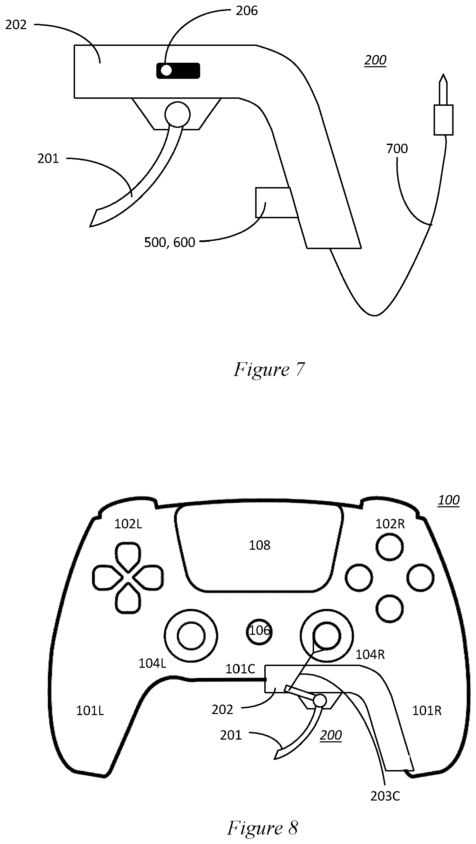

Alternatively or in addition, and turning how to Figure 7, embodiments of the present description may comprise safety catch 206 that is coupled to mounting member 202. Like with real firearms, safety catch 206 may comprise a switch, button or lever that, when engaged, prevents trigger 201 from moving when a force is applied thereto, and thus prevents unintended pulls of trigger 201. The specific workings of safety catch 206 may be thought of as analogous to that of commonly-known real-world firearms. Therefore, for brevity's sake, the workings of safety catch 206 shall not be discussed herein.

Given that trigger guards and safety catches are typically used on most firearms, trigger guard 205 and safety catch 206 may provide a more realistic gameplay experience to users. For example, when playing an FPS game, users may engage safety catch 206 and/or rest their trigger finger against trigger guard 205 when they do not intend to shoot, thus providing a more realistic/immersive FPS experience.

In any case, trigger 201 and mounting member 202 enable the user to hold and operate controller 100 as if it were a firearm, and thus enable users to hold video game controllers in a more accessible/intuitive manner for certain video games.

### Coupling Means

In order to cause controller 100 to emit a control signal for controlling the operation of an entertainment device (a video game console, for example) in response to pulling trigger 201, means for coupling the motion of trigger 201 to the circuitry of the video game controller are required.

Therefore, embodiments of the present description comprise coupling means 203 for coupling trigger 201 to the video game controller (controller 100, for example) such that a motion of trigger 201 relative to mounting member 202 causes the video game controller to emit a control signal for controlling an operation of an entertainment device when coupling means 203 are coupled to the video game controller.

The present description contemplates two ways in which the coupling means may be realised, that is by using a mechanical link between trigger 201 and a thumbstick of the video game controller, and/or by using an electrical link between trigger 201 and a port of the video game controller. However, persons skilled in the art will appreciate that other ways in which trigger 201 may be coupled to a video game controller such that motion of trigger 201 causes the video game controller to emit a control signal fall within the scope of the present disclosure.

Turning now to Figure 8, in embodiments of the present description, coupling means 203 may comprise coupling element 203C, wherein a first portion of coupling element 203C is coupled to trigger 201 and a second portion of coupling element 203C is removably couplable to a thumbstick of the video game controller (such as thumbstick 104R, for example).

Coupling element 203C may threadlike in nature. For example, coupling element 203C may copmrise a piece of thread, a piece of string, a wire, a cable, a chain, or the like. Alternatively, coupling element 203C may be of a more robust construction. For example, coupling element 203C may comprise a rigid member made of metal, plastic, wood, or the like. As will be appreciated by persons skilled in the art, the term "rigid" is used here in order to provide a distinction from the aforementioned threadlike coupling elements which may be employed, such threadlike coupling elements typically being flexible in nature.

As a non-limiting example of using coupling element 203C, the first portion thereof may be fastened to trigger 201 using a knot (in the case of a threadlike coupling element 203C) or by using a mechanical fastening like a rivet, (wing) nut and bolt, or the like (in the case of a rigid coupling element 203C), and the second portion thereof may be formed as a loop which may be placed around the shaft of the thumbstick, for example.

When coupled to trigger 201 and thumbstick 104R, coupling element 203C effectively links the motion of thumbstick 104R to that of trigger 201. Thus, when the user pulls on trigger 201, thumbstick 104R is pulled by coupling element 203C.

In order to cause controller 100 to emit a control signal for controlling an operation of an entertainment device (making the in-game weapon fire in the video game executed by a video game console, for example), the controller settings (that is, the mapping between a given controller button/thumbstick/trigger and a given in-game action) may be modified such that the in-game weapon fires when thumbstick 104R is manipulated. Modifying such controller setting is typically achieved by accessing an in-game settings menu.

Therefore, when the user pulls on trigger 201, thumbstick 104R is manipulated (pulled), and the control signal emitted by controller 100 in response to the pulling of thumbstick 104R causes the in-game weapon to be fired.

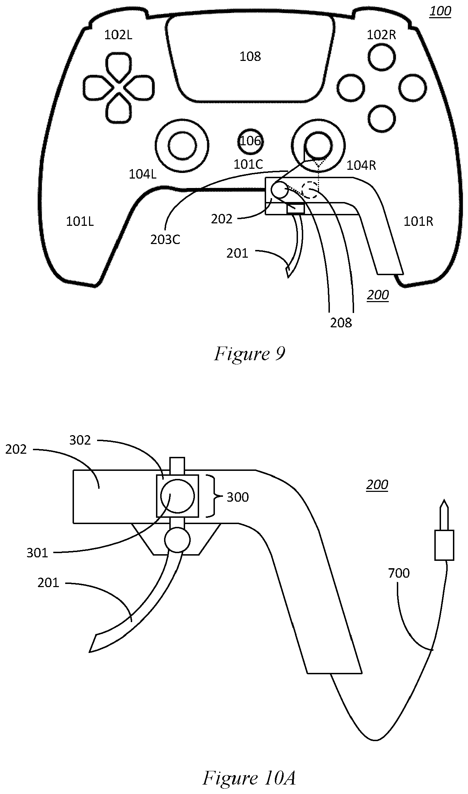

Optionally, and turning now to Figure 9, embodiments of the present description may comprise one or more pulleys 208 for adjusting a direction in which the thumbstick (such as thumbstick 104R, for example) moves when the motion of trigger 201 occurs, wherein the one or more pulleys 208 are coupled to mounting member 202, wherein the coupling member 203C makes contact with at least one of the pulleys 208 when coupled to the thumbstick.

As will be appreciated by persons skilled in the art, the pulley(s) need not rotate about respective axes to provide the advantage of adjusting the direction in which thumbstick 104R is pulled.

Rather, pulley(s) 208 may be a simple protrusion in mounting member 202 around which coupling element 203C may be disposed when coupled to thumbstick 104R.

The mechanically coupling trigger 201 to thumbstick 104R not only enables the motion of thumbstick 104R to cause controller 100 to emit a control signal, but also provides a *de facto* biasing means for returning trigger 201 to a predetermined position. As mentioned previously, thumbsticks typically comprise integral biasing means which are used to return the thumbstick to a so-called "neutral position" when not being manipulated by the user. By mechanically linking thumbstick 104R to trigger 201, the latter may be returned into a predetermined position by the biasing means of the former when the latter is not being pulled. Of course, additional biasing means (such as that depicted in Figure 5) may be optionally employed in order to reduce the time taken for trigger 201 to return to the predetermined position.

Alternatively or in addition to mechanically coupling trigger 201 to a thumbstick of controller, trigger 201 may be electrically coupled thereto.

Turning back to Figures 2 and 3, in embodiments of the present description, coupling means 203 may comprise generating circuitry 203A (pressure sensor 500 or proximity sensor 600, for example) configured to generate a signal in response to the motion of the trigger; and transmitting circuitry 203B (electrical cable 700, for example) configured to transmit the generated signal to a port of the video game controller, wherein at least a part of transmitting circuitry 203B is couplable to the port of the video game controller.

As a non-limiting example of this electrical coupling in use, pressure sensor 203A generates a signal (a voltage, for example) when trigger 201 makes contact therewith, the contact arising due to the trigger being displaced by the pulling thereof by the user. Subsequently, cable 203B, which is coupled to pressure sensor 203A and a port of controller 100 (a USB port, headphone jack, or the like), transmits the generated signal to controller 100, which causes controller 100 to emit a control signal.

In order to cause controller 100 to emit the control signal for controlling an operation of an entertainment device (making the in-game weapon fire in the video game executed by a video game console, for example) in response to receiving the generated signal, controller 100 may be configured (by way of software/program instructions) to emit, in response to receiving the generated signal from transmitting circuitry 203B, a control signal that is similar to that output by controller 100 then one of the shoulder triggers thereof is depressed. This emitted control signal may therefore be used in lieu of the shoulder trigger control signal to control the firing of the in-game weapon by the entertainment device.

It should be noted that pressure sensor 500 and electrical cable 700 are being used in a non-limiting example; there are other ways in which this electrical coupling may be realised, as shall be discussed next.

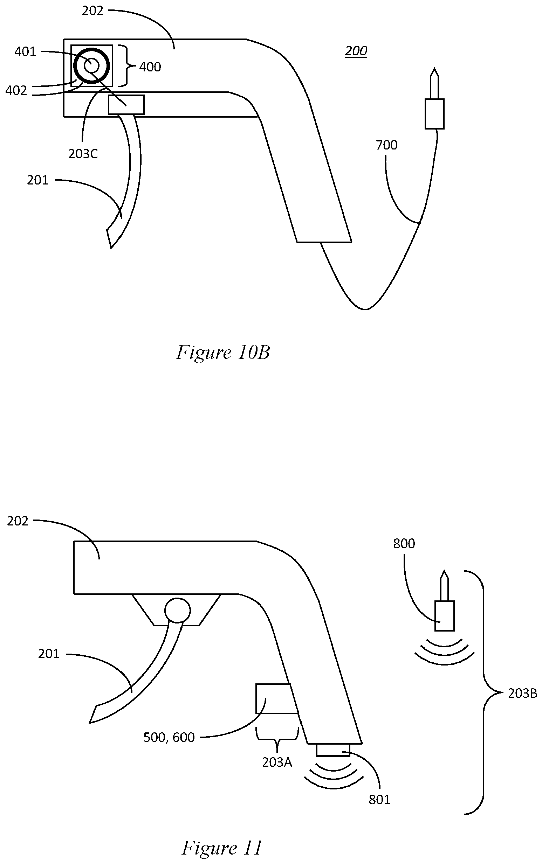

Turning now to Figures 10A and 10B, in embodiments of the present description, generating circuitry 203A may comprise a potentiometer 300 or electromagnetic generator 400, wherein a first part 301, 401 thereof may be coupled to trigger 201 and a second part 302, 402 thereof may be coupled to mounting member 202 such that the motion of trigger 201 causes first part 301, 401 to move relative to the second part 302, 402, and thereby cause potentiometer 300 or electromagnetic generator 400 to output a voltage, wherein generating circuitry 203A may be configured to generate the signal in dependence upon the voltage output from potentiometer 300 or electromagnetic generator 400.

Potentiometer 300 may be a potentiometer that is typically used in commonly-known thumbsticks in order to generate a voltage in response to the motion of the thumbstick. As depicted in Figure 10A, such a commonly-known potentiometer and trigger 201 may be coupled to mounting member 202 such that a part of trigger 201 is mechanically linked to the rotatable disc 301 of potentiometer 300 in a manner similar to that between a thumbstick shaft and rotating disc 301. Thus when trigger 201 is pulled, rotatable disc 301 rotates (moves) relative to the potentiometer housing 302 which houses rotatable disc 301, which in turn causes the resistance of the potentiometer (and thus the voltage output therefrom) to change.

Commonly-known potentiometers typically comprise biasing means for returning the thumbstick shaft to its neutral position when the thumbstick is not being manipulated. Such biasing means may therefore be leveraged for returning trigger 201 to a predetermined position when not being pulled.

Electromagnetic generator 400 may be a commonly-known electromagnetic generator comprising a rotatable (movable) magnet 401 housed within housing 402 within which one or more coils of wire are fixed. As depicted in Figure 10B, such a commonly-known electromagnetic generator and trigger 201 may be coupled to mounting member 202 such that a part of trigger 201 is linked to the rotatable magnet 401 of electromagnetic generator 400.

In order to rotate (move) the magnet 401 relative to the housing (and coil(s)) 402, a mechanical linkage may be employed. For example, a first portion of a threadlike coupling element (such as coupling element 203C, for example) may be coupled to the axle about which the magnet rotates and a second portion thereof may be coupled to trigger 201, with a portion of threadlike coupling element being wrapped around the axle. Thus when trigger 201 is pulled, magnet 401 rotates relative to the coil(s) 402, which in turn causes a voltage to be output therefrom.

Electromagnetic generator 400 may optionally comprise biasing means in the form of a rotational spring mounted between the axle of magnet 401 and the housing 402, which would cause trigger 201 to return to a predetermined position (and also cause the threadlike coupling element to wrap around the axle prior to another trigger pull).

In either case, the signal (voltage) outputted by potentiometer 300 or electromagnetic generator 400 by may be used outright as the generated signal, and thus may be transmitted from potentiometer 300 by transmitting circuitry 203B to a port of controller 100. Alternatively, this outputted voltage may be subjected to signal processing by one or more other parts of generating circuitry 203A (resistors, capacitors, processors, and the like) prior to transmission by transmitting circuitry 203B.

Turning back to Figures 2 and 3, alternatively or in addition, generating circuitry 203A may comprise one of: a pressure sensor 500 coupled to mounting member 202 such that the motion of trigger 201 brings trigger 201 into contact with pressure sensor 500, and thereby causes pressure sensor 500 to output a voltage, wherein generating circuitry 203A may be configured to generate the signal in dependence upon the voltage output from pressure sensor 500; and a proximity sensor 600 coupled to mounting member 202 such that the motion of trigger 201 brings trigger 201 within a threshold distance of proximity sensor 600, and thereby causes proximity sensor 600 to output a voltage, wherein generating circuitry 203A may be configured to generate the signal in dependence upon the voltage output from proximity sensor 600.

As will be appreciated by persons skilled in the art, the use of pressure sensor 500 has been discussed hereinbefore, and so for brevity's sake, no further discussion shall be provided. Regarding proximity sensor 600, skilled persons will appreciate that the main difference between using proximity sensor 600 instead of pressure sensor 500 is that trigger 201 need not make contact with proximity sensor 600 in order for a signal (voltage) to be generated therefrom; as mentioned previously, proximity sensors typically produce a discrete signal when an object (such as trigger 201, for example) falls within a threshold distance away from them.

Turning to Figures 2 and 11, transmitting circuitry 203B may comprise electrical cable 700 or wireless receiver 800 and wireless transmitter 801, wirless receiver 800 being couplable to a port of the video game controller. That is to say that transmitting circuitry 203B may transmit the generated signal via wired or wireless communication methods.

Electrical cable 700 (depicted in Figure 2) may be coupled to generating circuitry 203A and may be couplable with a port of controller 100 such as a USB port, headphone jack, or the like. Thus, the generated signal may be transmitted along electrical cable 700 to whichever port of controller 100 to which electrical cable 700 is coupled.

Wireless receiver 800 (depicted in Figure 11) may be similarly couplable with a port of controller 100 such as a USB port, headphone jack, or the like. However, wireless receiver 800 may be in wireless communication with another portion of transmitting circuitry 203B, such as wireless transmitter 801, for example, which may be coupled with generating circuitry 203A.

In either case, the signal generated by generating circuitry 203A may be transmitted to a port of controller 100.

While either mechanical coupling means (coupling element 203C, for example) or an electrical coupling means (generating circuitry 203A and transmitting circuitry 203B) may be employed, an additional advantage arises if both are employed. For example, the use of both types of coupling means 203 creates a failover arrangement where, if one coupling fails (due to damage, for example), the other may be relied upon.

In any case, whereas trigger 201 and mounting member 202 enable the user to hold and operate controller 100 as if it were a firearm, coupling means 203 enables this operation of controller 100 (pulling trigger 100 coupled thereto, for example) to control the operation of an entertainment device (the firing of the in-game weapon in the FPS video game executed by a video game console, for example). Coupling means 203 thus enables users to play video games in a more accessible/intuitive manner.

### Attachment Kit

As mentioned previously, in order to enable users to effectively adopt a point and shoot approach to playing video games, the gyroscopes/accelerometers present within commonly-known video game controllers may be utilised. Such gyroscopes/accelerometers are typically used to detect the orientation of controller 100 (and determine where the user is aiming).

For example, while playing an FPS game, the user may move/orient their controller towards the in-game object/character they want to shoot. The gyroscopes/accelerometers within the controller may transmit location/orientation data to the video games console executing the video game, and the location/orientation of the in-game gun being used by the user may be updated based on the transmitted location/orientation data. The user may subsequently pull trigger 201 when the in-game gun is directed at the character/object the user wants to shoot, thereby causing the in-game gun to fire at the character/object.

In order to improve controller orientation/location tracking (and thus make the point and shoot approach more accessible/ergonomic/accurate), it may be beneficial to track the controller using image processing techniques as well as (or alternatively to) using the motion tracking provided by the gyroscopes/accelerometers.

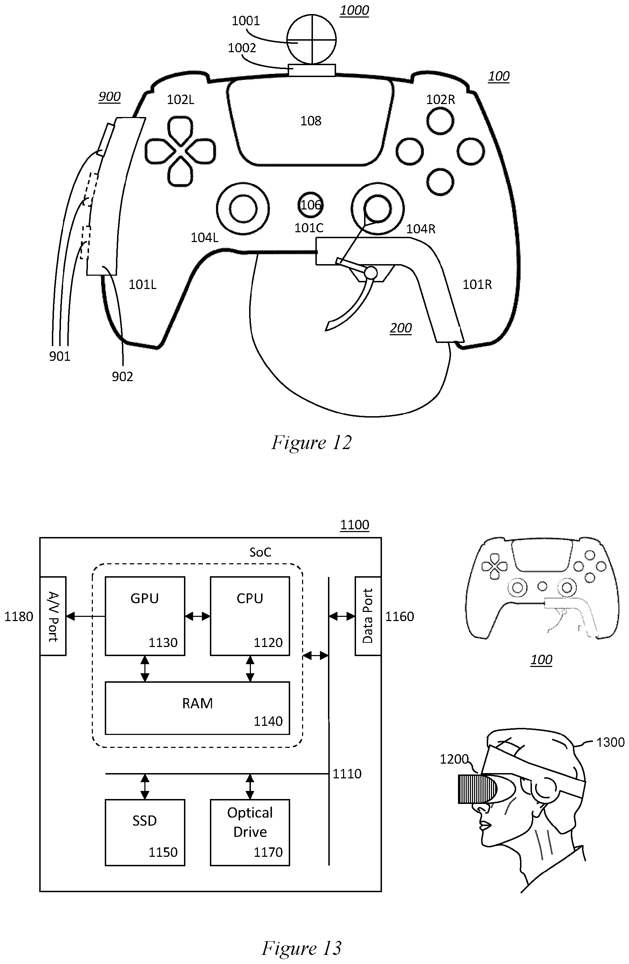

As such, and turning now to Figure 12, it may be beneficial to provide a second attachment (such as second attachment 900, for example) comprising one or more illuminating elements 901 (LEDs, for example). This second attachment may be removably coupled to the part of the controller that will face the display screen when the user is taking aim (that is, the second handle portion of the controller - with attachment 200 being coupled to the first handle portion).

This second attachment would enable the orientation/location of the controller to be tracked using cameras; the cameras may capture images of the user holding controller 100 (and the illuminating element(s)), and these images may be transmitted to an entertainment device. The transmitted images may be analysed by the entertainment device using commonly-known image processing techniques (computer vision techniques, for example) to determine a location and/or orientation of the illuminating element(s), and thus determine where the user is aiming.

Alternatively or in addition, in order to make this point and shoot approach more accessible/ergonomic/accurate, it may be beneficial to provide a third attachment (such as third attachment 1000, for example) comprising a sight 1001 for aiming. This third attachment may be removably couplable to the portion of controller 100 that lies between the two shoulder buttons of controller 100 (hereinafter referred to as the "yoke" of controller 100). The sight of this third attachment may enable the user to aim their controller more accurately, as does the sight of a real-world firearm.

Hence more generally, an attachment kit for a video game controller (such as controller 100, for example) may comprise attachment 200; and at least one of: second attachment 900 for the video game controller, comprising one or more illuminating elements 901, and second mounting member 902 that is removably couplable to the other of the two handle portions of the video game controller, wherein the one or more illuminating elements 901 are coupled to second mounting member 902; and third attachment 1000 for the video game controller, comprising a sight 1001 for aiming, and third mounting member 1002 that is removably couplable to the video game controller, wherein sight 1001 is coupled to third mounting member 1002.

Like with mounting member 202, second mounting member 902 and third mounting member 1002 may be formed/shaped so as to enable it to be removably coupled to controller 100. For example, the profile of the part of second mounting member 902 that couples with handle portion 101L (that is, the other of the two handle portions of controller 100) may be formed/shaped so as to be complementary with the profile of handle portion 101L, and the profile of the part of third mounting member 1002 that couples with the yoke of controller 100 may be formed/shaped so as to be complementary with the profile of the yoke. This may enable a secure fitting of second mounting member 902 and/or third mounting member 1002 to controller 100 when coupled thereto, albeit one that may be overcome by the user should they wish to remove second mounting member 902 and/or third mounting member 1002 from controller 100.

Regarding second attachment 900, the illuminating element(s) 901 thereof may be arranged in a predetermined pattern, such as a chevron or saltire, as non-limiting examples. Of course, when there is only one illuminating element 901 present, then this illuminating element 901 may be formed into a predetermined shape (pattern), such as a circle, triangle, cross, square, or the like. Skilled persons will appreciate that such forming may also be carried out on each of a plurality of illuminating elements 901, should such a plurality be present in second attachment 900.

By arranging/forming the illuminating element(s) 901 in such a manner, the location/orientation tracking of controller 100 using image processing technique may be made more accurate. This is because the captured images of second attachment 900 during use may be analysed to identify the predetermined pattern of illuminating element(s) 901, and the orientation/location of this predetermined pattern as captured in the image may be determined by evaluating it against a datum orientation/location stored in, say, the memory of the entertainment device carrying out the image processing, for example.

In order to provide electrical power to illuminating element(s) 901, second attachment 900 may comprise an electrical cable (not shown) that is couplable with a port of controller 100, such an electrical cable enabling second attachment to draw electrical power from controller 100. However, drawing power from controller 100 may result in a reduction in the battery life of controller 100. Therefore, alternatively or in addition, second attachment 900 may comprise a power source such as a (rechargeable) battery, for example.

Skilled persons will appreciate that while either an electrical cable or a (rechargeable) battery may be employed, an additional advantage arises if both powering means are employed. For example, the use of both creates a failover arrangement where, if one powering means fails (due to damage, for example), the other may be relied upon.

Regarding third attachment 1000, third mounting member 1002 thereof may be couplable with a port of controller 100. For example, in commonly-known controllers, a port (such as a USB port, for example) is typically located within the yoke of the controller. Given that third attachment 1000 may be couplable with the yoke of controller 100, third mounting member 1002 thereof may comprise a USB connector that may be inserted into the USB port of controller 100. This may not only provide a more secure fit of third attachment 1000 to controller 100, but may enable sight 1001 thereof to draw power from controller 100 to power, say, a holographic reticle (such as a so-called "red dot sight", for example) comprised within sight 1001, for example. As will be appreciated by persons skilled in the art, the power required to power such a holographic reticle is significantly lower than that required to power illuminating element(s) 901. Thus, any reduction in the battery life of controller 100 is likely to be negligible.

In the case where attachment 200 comprises transmitting circuitry 203B, then third mounting member 1002 may comprise a port (not shown) that is couplable with transmitting circuitry 203B. Such a port is likely to be one that is similar to that located in the yoke of controller 100 (a USB port, for example). Transmitting circuitry 203B may thus be coupled to third mounting member 1002, which in turn may be coupled to the port of controller 100, thus enabling the signal generated by generating circuitry 203A to be transmitted through third mounting member 1002 to controller 100. Of course, such a port in third mounting member 1002 may not be necessary if transmitting circuitry 203B is couplable with a different port of controller 100 (such as another USB port, a headphone jack, or the like).

Alternatively, mounting member 202 and third mounting member 1002 may be coupled via an electrical cable, which would serve as transmitting circuitry 203B. Doing so would effectively combine attachment 200 and attachment 1000.

In any case, the attachment kit may make this point and shoot approach to playing video games more accessible/ergonomic/accurate for users. This is because, the location/orientation tracking of controller 100 may be improved (using second attachment 900) and/or the user may aim their controller 100 with greater accuracy (using third attachment 1000).

### Video Game Input System

As will be appreciated by persons skilled in the art, attachment 200 (and optionally second attachment 900 and/or third attachment 1000) may be coupled to controller 100 in order that users may hold and operate controller 100 in a manner analogous to that of a real-world firearm, and thereby provide inputs to an entertainment device (PC, video game console, or the like) in order to control the processing thereof (an executed video game, for example).

Therefore, and turning back to Figure 12, in embodiments of the present description, a video game input system may comprise video game controller 100; and couplable to the video game controller, one of: attachment 200; and the attachment kit described previously (which in turn comprises attachment 200 and at least one of second attachment 900 and third attachment 1000). That is to say that, a video game input system may comprise controller 100 and attachment 200 (and optionally second attachment 900 and/or third attachment 1000).

As mentioned previously, location/orientation tracking of controller 100 may be carried out by using image processing techniques. As such, the video game input system may optionally comprise an imaging device that is couplable to an entertainment device (a video game console, for example), wherein the imaging device is configured to capture one or more images of video game controller 100 when held by a user, and transmit one or more of the images to the entertainment device when coupled thereto.

As will be appreciated by persons skilled in the art, while location/orientation tracking using image processing techniques was discussed previously with respect to second attachment 900, such tracking may be carried out without second attachment 900 being coupled to controller 100, albeit with potentially less accuracy.

As will be appreciated by persons skilled in the art, regardless of whether an imaging device is present or not, playing the video game using controller 100 coupled to attachment 200 (and optionally second attachment 900 and/or third attachment 1000) typically involves the use of an entertainment device (a video game console or PC, for example).

Turning now to Figure 13, the video game input system may comprise entertainment device 1100, which in turn comprises: receiving circuitry (such as data port 1160, which may be a USB, HDMI, WiFi ^{®}, or Bluetooth ^{®} port, or the like, or I/O bus 1110) configured to receive at least the control signal emitted from video game controller 100 in response to the motion of trigger 201, and processing circuitry (such as one or more CPUs 1120 and/or one or more GPUs 1130) configured to control an operation of entertainment device 1100 (firing an in-game weapon in an FPS game executed by entertainment device 1100, for example) based at least upon the received control signal.

As mentioned previously, an example of an entertainment device 1100 is a computer or console such as the Sony ^{®} PlayStation 5 ^{®} (PS5).

The entertainment device 1100 comprises a central processor 1120. This may be a single or multi core processor, for example comprising eight cores as in the PS5. The entertainment device also comprises a graphical processing unit or GPU 1130. The GPU can be physically separate to the CPU, or integrated with the CPU as a system on a chip (SoC) as in the PS5.

The entertainment device also comprises RAM 1140, and may either have separate RAM for each of the CPU and GPU, or shared RAM as in the PS5. The or each RAM can be physically separate, or integrated as part of an SoC as in the PS5. Further storage is provided by a disk 1150, either as an external or internal hard drive, or as an external solid state drive, or an internal solid state drive as in the PS5.

The entertainment device may transmit or receive data via one or more data ports 1160, such as a USB port, Ethernet ^{®} port, WiFi ^{®} port, Bluetooth ^{®} port or similar, as appropriate. It may also optionally receive data via an optical drive 1170.

Interaction with the system is typically provided using one or more handheld controllers 80, such as the DualSense ^{®} controller in the case of the PS5.

Audio/visual outputs from the entertainment device are typically provided through one or more A/V ports 1180, or through one or more of the wired or wireless data ports 1160.

Where components are not integrated, they may be connected as appropriate either by a dedicated data link or via a bus 1110.

An example of a device for displaying images output by the entertainment device is a head mounted display 'HMD' 1200, worn by a user 1300.

As mentioned previously, in order to cause controller 100 to emit a control signal for controlling an operation of entertainment device 1100 in response to receiving the generated signal from transmitting circuitry 203B (should such transmitting circuitry 203B be employed), controller 100 may be configured (by way of software/program instructions) to emit, in response to receiving the generated signal from transmitting circuitry 203B, a control signal that is similar to that output by controller 100 then one of the shoulder triggers thereof is depressed, this emitted control signal being used in lieu of the shoulder trigger control signal to control the firing of the in-game weapon by entertainment device 1100.

As such, the required adaptation to existing parts of a conventional equivalent device (controller 100, for example) may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

### Variant Embodiments

The inventors also envisage that the point and shoot approach discussed hereinbefore may be carried out with just controller 100, that is, without the attachments 200, 900 and 1000.

As previously mentioned, the latest generations of conventional games controllers comprise location/orientation tracking means such as gyroscopes and accelerometers. Such tracking means may therefore be exploited to enable users to adopt this point and shoot approach to shooting games; while the user moves the controller towards the in-game object/character they want to shoot, the tracking means may transmit location/orientation data to the video games console executing the video game, and the location/orientation of the in-game gun being used by the user may be updated based on the transmitted location/orientation data. As will be appreciated by persons skilled in the art, an initial calibration may be required such that a datum controller 100 orientation may be established, such a datum orientation being that of one of the shoulders of controller 100 facing a display screen/entertainment device, for example.

As mentioned previously with respect to the attachment kit, in order to improve controller orientation/location tracking (and thus make the point and shoot approach more accessible/ergonomic/accurate), it may be beneficial to track the controller using image processing techniques as well as (or alternatively to) using the motion tracking provided by the gyroscopes/accelerometers.

As such, it may be beneficial to provide an attachment (such as second attachment 900, for example) comprising one or more illuminating elements 901 (LEDs, for example). This second attachment may be removably coupled to the part of the controller that will face the display screen when the user is taking aim (that is, the second handle portion of the controller - with attachment 200 being coupled to the first handle portion). That is to say that second attachment 900 may be used without attachment 200 or third attachment 1000.

Additionally, other processes typically associated with firearms (reloading, aiming, and the like) may be carried out in an analogous manner on controller 100.

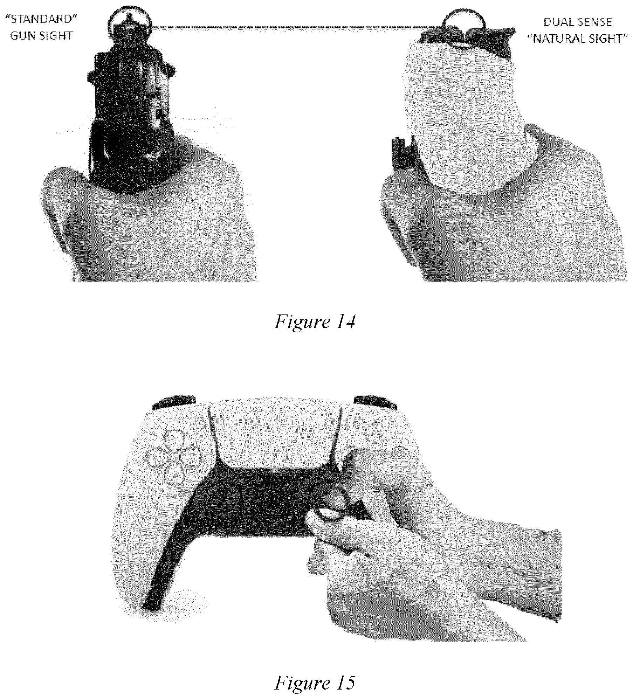

Accordingly, and turning now to Figure 14, the user may aim by using the shoulder buttons and triggers of controller 100 in a manner analogous to that of iron sights commonly found on firearms. More specifically, the user may use the gap formed between a shoulder button and an adjacent trigger in order to aim their controller at the desired on-screen object, just like how users of firearms may use the gap formed between prongs of a set of iron sights disposed on the top of the firearm for aiming purposes.

As will be appreciated by persons skilled in the art, the depiction in Figure 14 is entirely non-limiting; controller 100 may alternatively be held in the user's left hand in that is their dominant hand. Moreover, optionally, two controllers 100 may be used in order to dual wield in-game firearms. Furthermore, the user is not limited to only holding controller 100 with one hand. For example, the user may hold each of the two handles of controller 100 in each of their hands for steadier aiming, and thus hold controller 100 in a manner analogous to that of holding a rifle or other large firearm.

Turning now to Figure 15, the user may shoot and/or reload their in-game weapon by manipulating one of the thumbsticks of controller 100. More specifically, the user may use one hand to pull/push the thumbstick in a manner analogous to that of a firearm trigger pull and thus cause the in-game firearm to fire, and may use the other hand to press down on the same thumbstick in order to reload their in-game firearm (thumbsticks 104L,R may optionally also be operable as buttons by pressing down on them, as previously mentioned). Alternatively, pressing down on the thusmbstick may be used for shooting, and the pushing/pulling of the thumbstick may be used for reloading.

Example(s) of the present technique are defined by the following numbered clauses:
1. An attachment for a video game controller, comprising:
   a trigger;
   a mounting member that is removably couplable to one of two handle portions of the video game controller, wherein the trigger is movably coupled to the mounting member; and
   coupling means for coupling the trigger to the video game controller such that a motion of the trigger relative to the mounting member causes the video game controller to emit a control signal for controlling an operation of an entertainment device when the coupling means are coupled to the video game controller.
2. An attachment according to clause 1, wherein:
   the trigger is hingedly coupled to the mounting member, or
   the trigger is slidably coupled to the mounting member.
3. An attachment according to clause 1 or clause 2, wherein the coupling means comprises a coupling element, wherein a first portion of the coupling element is coupled to the trigger and a second portion of the coupling element is removably couplable to a thumbstick of the video game controller.
4. An attachment according to clause 3, comprising one or more pulleys for adjusting a direction in which the thumbstick moves when the motion of the trigger occurs, wherein the one or more pulleys are coupled to the mounting member, wherein the coupling element makes contact with at least one of the pulleys when coupled to the thumbstick.
5. An attachment according to any preceding clause, wherein the coupling means comprises:
   generating circuitry configured to generate a signal in response to the motion of the trigger; and
   transmitting circuitry configured to transmit the generated signal to a port of the video game controller, wherein at least a part of the transmitting circuitry is couplable to the port of the video game controller.
6. An attachment according to clause 5, wherein the generating circuitry comprises a potentiometer or electromagnetic generator, wherein a first part thereof is coupled to trigger and a second part thereof is coupled to mounting member such that the motion of the trigger causes the first part to move relative to the second part, and thereby cause the potentiometer or electromagnetic generator to output a voltage, wherein the generating circuitry is configured to generate the signal in dependence upon the voltage output from the potentiometer or electromagnetic generator.
7. An attachment according to clause 5, wherein the generating circuitry comprises one of:
   a pressure sensor coupled to the mounting member such that the motion of the trigger brings the trigger into contact with the pressure sensor, and thereby causes the pressure sensor to output a voltage, wherein the generating circuitry is configured to generate the signal in dependence upon the voltage output from the pressure sensor; and
   a proximity sensor coupled to the mounting member such that the motion of the trigger brings the trigger within a threshold distance of the proximity sensor, and thereby causes the proximity sensor to output a voltage, wherein the generating circuitry is configured to generate the signal in dependence upon the voltage output from the proximity sensor.
8. An attachment according to any one of clauses 5 to 7, wherein the transmitting circuitry comprises an electrical cable or a wireless receiver and transmitter, the wireless receiver being couplable to a port of the video game controller.
9. An attachment according to any preceding clause, comprising biasing means for biasing a position of the trigger relative to the mounting member towards a predetermined position.
10. An attachment according to any preceding clause, comprising a trigger guard.
11. An attachment according to any preceding clause, comprising a safety catch that is coupled to the mounting member.
12. An attachment kit for a video game controller, comprising:
   an attachment according to any preceding clause; and
   at least one of:
      a second attachment for the video game controller, comprising one or more illuminating elements, and a second mounting member that is removably couplable to the other of the two handle portions of the video game controller, wherein the one or more illuminating elements are coupled to the second mounting member; and
      a third attachment for the video game controller, comprising a sight for aiming, and a third mounting member that is removably couplable to the video game controller, wherein the sight is coupled to the third mounting member.
13. A video game input system, comprising:
   a video game controller; and
   couplable to the video game controller, one of:
      an attachment according to any one of clauses 1 to 11; and
      an attachment kit according to clause 12.
14. A video game input system according to clause 13, comprising an imaging device that is couplable to an entertainment device, wherein the imaging device is configured to capture one or more images of the video game controller when held by a user, and transmit one or more of the images to the entertainment device when coupled thereto.
15. A video game input system according to clause 13 or clause 14, comprising an entertainment device comprising:
   receiving circuitry configured to receive at least the control signal emitted from the video game controller in response to the motion of the trigger, and
   processing circuitry configured to control an operation of the entertainment device based at least upon the received control signal.

Numerous modifications and variations of the present disclosure are possible in light of the above teachings. It is therefore to be understood that, within the scope of the claims, the disclosure may be practiced otherwise than as specifically described herein.

In so far as embodiments of the disclosure have been described as being implemented, at least in part, by one or more software-controlled information processing apparatuses, it will be appreciated that a machine-readable medium (in particular, a non-transitory machine-readable medium) carrying such software, such as an optical disk, a magnetic disk, semiconductor memory or the like, is also considered to represent an embodiment of the present disclosure. In particular, the present disclosure should be understood to include a non-transitory storage medium comprising code components which cause a computer to perform any of the disclosed method(s).

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more computer processors (e.g. data processors and/or digital signal processors). The elements and components of any embodiment may be physically, functionally and logically implemented in any suitable way. Indeed, the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to these embodiments. Additionally, although a feature may appear to be described in connection with particular embodiments, one skilled in the art would recognize that various features of the described embodiments may be combined in any manner suitable to implement the present disclosure.

## Claims

1. An attachment for a video game controller, comprising:
a trigger;
a mounting member that is removably couplable to one of two handle portions of the video game controller, wherein the trigger is movably coupled to the mounting member; and
coupling means for coupling the trigger to the video game controller such that a motion of the trigger relative to the mounting member causes the video game controller to emit a control signal for controlling an operation of an entertainment device when the coupling means are coupled to the video game controller.

2. An attachment according to claim 1, wherein:
the trigger is hingedly coupled to the mounting member, or
the trigger is slidably coupled to the mounting member.

3. An attachment according to claim 1 or claim 2, wherein the coupling means comprises a coupling element, wherein a first portion of the coupling element is coupled to the trigger and a second portion of the coupling element is removably couplable to a thumbstick of the video game controller.

4. An attachment according to claim 3, comprising one or more pulleys for adjusting a direction in which the thumbstick moves when the motion of the trigger occurs, wherein the one or more pulleys are coupled to the mounting member, wherein the coupling element makes contact with at least one of the pulleys when coupled to the thumbstick.

5. An attachment according to any preceding claim, wherein the coupling means comprises:
generating circuitry configured to generate a signal in response to the motion of the trigger; and
transmitting circuitry configured to transmit the generated signal to a port of the video game controller, wherein at least a part of the transmitting circuitry is couplable to the port of the video game controller.

6. An attachment according to claim 5, wherein the generating circuitry comprises a potentiometer or electromagnetic generator, wherein a first part thereof is coupled to trigger and a second part thereof is coupled to mounting member such that the motion of the trigger causes the first part to move relative to the second part, and thereby cause the potentiometer or electromagnetic generator to output a voltage, wherein the generating circuitry is configured to generate the signal in dependence upon the voltage output from the potentiometer or electromagnetic generator.

7. An attachment according to claim 5, wherein the generating circuitry comprises one of:
a pressure sensor coupled to the mounting member such that the motion of the trigger brings the trigger into contact with the pressure sensor, and thereby causes the pressure sensor to output a voltage, wherein the generating circuitry is configured to generate the signal in dependence upon the voltage output from the pressure sensor; and
a proximity sensor coupled to the mounting member such that the motion of the trigger brings the trigger within a threshold distance of the proximity sensor, and thereby causes the proximity sensor to output a voltage, wherein the generating circuitry is configured to generate the signal in dependence upon the voltage output from the proximity sensor.

8. An attachment according to any one of claims 5 to 7, wherein the transmitting circuitry comprises an electrical cable or a wireless receiver and transmitter, the wireless receiver being couplable to a port of the video game controller.

9. An attachment according to any preceding claim, comprising biasing means for biasing a position of the trigger relative to the mounting member towards a predetermined position.

10. An attachment according to any preceding claim, comprising a trigger guard.

11. An attachment according to any preceding claim, comprising a safety catch that is coupled to the mounting member.

12. An attachment kit for a video game controller, comprising:
an attachment according to any preceding claim; and
at least one of:
a second attachment for the video game controller, comprising one or more illuminating elements, and a second mounting member that is removably couplable to the other of the two handle portions of the video game controller, wherein the one or more illuminating elements are coupled to the second mounting member; and
a third attachment for the video game controller, comprising a sight for aiming, and a third mounting member that is removably couplable to the video game controller, wherein the sight is coupled to the third mounting member.

13. A video game input system, comprising:
a video game controller; and
couplable to the video game controller, one of:
an attachment according to any one of claims 1 to 11; and
an attachment kit according to claim 12.

14. A video game input system according to claim 13, comprising an imaging device that is couplable to an entertainment device, wherein the imaging device is configured to capture one or more images of the video game controller when held by a user, and transmit one or more of the images to the entertainment device when coupled thereto.

15. A video game input system according to claim 13 or claim 14, comprising an entertainment device comprising:
receiving circuitry configured to receive at least the control signal emitted from the video game controller in response to the motion of the trigger, and
processing circuitry configured to control an operation of the entertainment device based at least upon the received control signal.
